Europäisches Patentamt

(19) European Patent Office

Office européen des brevets

(11) **EP 0 636 112 B1**

(12) **EUROPEAN PATENT SPECIFICATION**

(45) Date of publication and mention
of the grant of the patent:
**18.06.1997 Bulletin 1997/25**

(21) Application number: **93909491.8**

(22) Date of filing: **08.04.1993**

(51) Int. Cl.$^6$: **C04B 35/593**, C04B 35/80

(86) International application number:
**PCT/US93/03283**

(87) International publication number:
**WO 93/21129 (28.10.1993 Gazette 1993/26)**

(54) **SINTERED SILICON NITRIDE OF HIGH TOUGHNESS, STRENGTH AND RELIABILITY**

GESINTERTES SILICIUMNITRID HOHER ZÄHIGKEIT, FESTIGKEIT UND ZUVERLÄSSIGKEIT

NITRURE DE SILICIUM FRITTE A RESISTANCE, SOLIDIDITE ET FIABILITE ELEVEES

(84) Designated Contracting States:
**AT BE CH DE DK ES FR GB GR IE IT LI LU MC NL PT SE**

(30) Priority: **09.04.1992 US 865581**

(43) Date of publication of application:
**01.02.1995 Bulletin 1995/05**

(73) Proprietor: **AlliedSignal Inc.**
**Morristown, New Jersey 07962-2245 (US)**

(72) Inventors:
 • **LI, Chien-Wei**
**Livingston, NJ 07039 (US)**
 • **GOLDACKER, Jeffrey, A.**
**Somerville, NJ 08876 (US)**

(74) Representative: **Brock, Peter William et al**
**Urquhart-Dykes & Lord**
**1 Richfield Place**
**Richfield Avenue**
**Reading RG1 8EQ Berkshire (GB)**

(56) References cited:
**EP-A- 0 397 464**       **WO-A-92/22516**

## Description

This invention relates to a process for making a sintered silicon nitride ceramic having high fracture toughness, strength, and reliability.

Silicon nitride ceramics are well known for their excellent strength at temperature in excess of 1000°C. However, at temperature greater than 1200°C for the advanced turbine engine applications, few silicon nitride ceramics meet the strength and reliability requirements. Furthermore, conventional silicon nitride ceramics have fracture toughness typically ranging from 4 to 6 MPa $\cdot$ m$^{0.5}$, such low toughness makes them susceptible to significant strength degradation from the damage introduced during engine operation. It would be desirable to provide a silicon nitride having high fracture toughness, hence strong resistance to damage, high strength, and high reliability both at room and elevated temperature. Moreover, it would be most desirable to have a silicon nitride material with this combination of excellent properties which can easily be formed into near net shape parts of complex geometry.

Sintering silicon nitride requires sintering aids which form grain boundary phases. Rare earth oxides are effective sintering aids and form refractory grain boundary phases yielding silicon nitride ceramics with good high temperature properties. However, they often require high sintering temperature and/or the application of external pressure for complete densification.

Hot pressing generally produces silicon nitride ceramics with excellent strength properties. U.S. Pat. No. 4,234,343 to Anderson discloses that hot pressed silicon nitride containing different rare earth oxides as sintering aids can have 250 MPa to 550 MPa strength at 1400°C with smaller rare earth element resulting in higher 1400°C strength. Ueno and Toibana report in Yogyo-Kyokai-Shi, vol. 9, 409-414 (1983) that hot pressed silicon nitride containing yttria ($Y_2O_3$) in combination with other rare earth oxides exhibits strength of over 600 MPa at 1300°C. U.S. Pat. No. 5,021,372 discloses silicon nitridebased ceramic formed by hot pressing having room temperature 4-point bend strength ranging from about 600 to 1200 MPa and fracture toughness greater than 6 MPa $\cdot$ m$^{0.5}$, but the additives used in the fabrication restrict the applications of this silicon nitride to relatively low temperature. Furthermore, it is well known in the field that the process of hot pressing has limited value in the production of structural ceramics because of its shape and size limitations. It is also well known that hot pressing results in a product with anisotropic microstructure and mechanical property undesirable for most applications.

Hot isostatic pressing has the same advantages as hot pressing but without the shape, size, and anisotropy limitations. U.S. Pat. No. 4,904,624 to Yeckley teaches the fabrication of silicon nitride parts containing rare earth sintering aid with flexural strength in excess of 525 MPa at 1370°C using glass-encapsulated hot isostatic pressing. However, the fracture toughness of this $Si_3N_4$ is only 4 to 5 MPa $\cdot$ m$^{0.5}$. Similarly, U.S. Pat. No. 4,870,036 to Yeh teaches how to fabricate silicon nitride ceramics containing yttria and strontium compound having flexural strength greater than 465 MPa at 1375°C using hot isostatic pressing, but the fracture toughness of this $Si_3N_4$ is 5 to 6 MPa $\cdot$ m$^{0.5}$. Thus, although hot isostatic pressing can produce silicon nitride ceramics with excellent strength, the fracture toughness of such material is low.

Gas pressure sintering is a manufacturing process for silicon nitride employing moderate nitrogen pressure during high temperature firing. It can be used to fabricate refractory silicon nitride parts without shape and size limitations. U.S. Pat. No. 4,628,039 to Mizutani et al. describes using gas pressure sintering to fabricate silicon nitride ceramics having excellent four-point bending strength at 1300°C. Said silicon nitride ceramics contain sintering aids consisting of oxides of two rare earth elements having ionic radii greater and smaller than 0.97 Å respectively, and other minor additives such as oxides of elements from Group IIa of the Periodic Table. U.S. Pat. No. 4,795,724 to Soma et al. describes gas pressure sintered silicon nitride containing at least two kinds of sintering aids, selected from Y, Er, Tm, Yb, and Lu, and having a 1400°C flexural strength of at least 500 MPa; an example given in this patent shows that a gas pressure sintered silicon nitride ceramic containing $Y_2O_3$ and $La_2O_3$ has a strength of only 230 MPa at 1400°C. No efforts were made in the above identified inventions to fabricate a silicon nitride of unusual microstructure, toughness, flaw tolerance, and high Weibull modulus.

It has been reported that silicon nitride containing 10 to 50 % by volume silicon carbide, according to U.S. Patent No. 3 890 250, and up to 40 % by volume silicon carbide, according to U.S. Patent No. 4 184 882, has improved strength at 1400°C; the ceramics taught by those patentees were prepared by hot pressing and their fracture toughness was not reported. U.S. Pat. No. 4 800 182 discloses a hot pressed silicon nitride/silicon carbide composite, with 5 to 30 wt% of silicon carbide, having three-point bending strength of at least 930 MPa at room temperature and fracture toughness of 5.3 to 7 MPa $\cdot$ m$^{0.5}$ depending on the silicon carbide content. U.S. Pat. No. 4 814 301 discloses the fabrication of a sintered silicon nitride using crystalline silicates and metal carbides with high retained strength at 1200°C. The strength of those silicon nitride ceramics at 1375°C will not be high since silicates containing Na, Ca, Mg, Al, and Fe, etc. are used. Furthermore, there is no disclosure in Steinmann concerning said properties as microstructural toughness and flaw tolerance, or the importance of these properties in achieving reliable ceramics. There remains a need in the art for tough, strong, and reliable silicon nitride ceramics.

EP-A-0397464 discloses a silicon nitride sintered body, which consists essentially of silicon nitride, at least one compound of at least one rare earth element and silicon carbide and in which intergranular phases between the silicon nitride particles are substantially composed of crystal phases.

EP-A-0397464 also discloses a method of manufacturing such a silicon nitride sintered body which comprises:

preparing a powder consisting of powdery raw materials of silicon nitride, at least one oxide of at least one rare earth element and silicon carbide, shaping the thus prepared powder to obtain a shaped body, subsequently subjecting the shaped-body to a firing under an $N_2$ atmosphere, and substantially crystallizing intergranular phases between silicon nitride particles during a temperature-descending stage following the firing.

The temperature specified for the firing is from 1700 to 2100°C, preferably 1900 to 2000°C.

WO92/22516 corresponds to European Application 92912724.9/0589997 and falls within the state of the art according to Article 54(3) EPC. It discloses a silicon nitride sintered body having a composition essentially of:

(a) 85 to 94% by weight β silicon nitride;
(b) 6 to 15% by weight grain boundary phases consisting essentially of (i) at least two rare earth elements wherein yttrium is considered a rare earth, and, optionally, strontium which, calculated as SrO, is 0 to 2 percent by weight of the total body, and (ii) at least two of Si, N, O, and C; and
(c) an additive consisting essentially of a metal-carbon compound present in the amount of about 0.2 to 3.5% by volume, said additive being substantially homogenously dispersed within said sintered body, said sintered body having a microstructure wherein (i) said β silicon nitride grains are acicular and have an average grain width ranging from 0.5 to 1.5 $\mu$m, (ii) at least 25% of said grains have width greater than 0.7 $\mu$m, and at least 10% of said grains have width greater than 1 $\mu$m, and (iii) no more than 5% of said grains have width greater than 3.5 $\mu$m and apparent aspect ratio greater than 5, with the proviso that the average aspect ratio of all grains is at least 1.8, and having a density at least 95% of theoretical.

The body can be sintered by a process having at least two steps, wherein:

(a) at least a first of said steps is carried out at a temperature between 1800 and 2000°C and for a time ranging from 1 to 10 hours in order to prepare an intermediate ceramic;
(b) at least a succeeding one of said steps is carried out at a temperature ranging from 2000 and 2100°C and for a time ranging from 1 to 10 hours in order to heat treat the intermediate ceramic;
(c) each of said steps being carried out under nitrogen pressure sufficiently high to avoid decomposition of silicon nitride, and the temperature of said succeeding steps being at least 25°C greater than that of said first of said steps.

The present invention provides a process for making a silicon nitride ceramic that is tough, strong and has exceptionally high reliability. Such advantageous properties are the direct result of a unique microstructure and composition present in the sintered body. In particular, the silicon nitride ceramics of this invention evidence fracture toughness greater than 7.5 MPa · m$^{0.5}$, a four-point bending strength greater than 600 MPa at room temperature and greater than 450 MPa at 1375°C, and a Weibull modulus greater than 19. Such ceramics are processed using gas pressure sintering, and therefore can be manufactured into complex shapes easily and economically.

The invention further provides a process for making a damage resistant silicon nitride ceramic that has fracture toughness greater than 7.5 MPa · m$^{0.5}$, a four-point flexural strength of at least 790 MPa at room temperature with a Weibull modulus of at least 19, a stress rupture lifetime of at least 100 hours at 1200°C under 480 MPa stress, and a four-point flexural strength of at least 450 MPa at 1375°C. Said silicon nitride consists essentially of:

(a) 85 to 94% by weight β silicon nitride;
(b) 6 to 15% by weight grain boundary phases consisting essentially of (i) at least two rare earth elements wherein yttrium is considered a rare earth, and Sr ranging from 0 to 2 percent by weight of the total body when calculated as SrO, and (ii) at least two of Si, N, O, and C; and
(c) an additive consisting essentially of silicon carbide particulate with an average size less than 2 $\mu$m in the amount ranging from 0.5 to 1.9 parts by volume per 100 parts by volume of the components (a) and (b), said sintered body having a microstructure wherein (1) said β silicon nitride grains are acicular and have an average grain width ranging from 0.5 to 0.8 $\mu$m, (ii) at least 25% of said grains have width greater than 0.6 $\mu$m, and at least 10% of said grains have width greater than 0.9 $\mu$m, (iii) less than 5 percent of the grains have width greater than 2.5 $\mu$m and apparent aspect ratio greater than 5, with the proviso that the average apparent aspect ratio of all grains is at least 1.8, the sintered body having a density at least 97% of theoretical and a fracture origin, at least 90% of which is comprised of large acicular βSi$_3$N$_4$ grains and the average size of which ranges from 15 to 30 $\mu$m.

The process for making the silicon nitride sintered body consists of firing in the temperature range of 1500°C to 2100°C wherein (a) an initial sintering is carried out at temperatures between 1500 and 1850°C for a time greater than 0.5 hours but less than eight hours; (b) an intermediate sintering is carried out at a temperature between 1850 and 2000°C for at least 30 minutes but less than five hours; (c) a final sintering is carried out at temperatures ranging from higher than 2000°C up to 2100°C and for a time ranging from one to five hours; (d) each of the steps being carried out under nitrogen pressure sufficiently high to avoid decomposition of silicon nitride, and the temperature of the succeeding steps being at least 25°C greater than that of the first of the steps.

According to the last aspect of this invention, there is provided a postsintering heat treatment of this silicon nitride body that preserves its excellent toughness. This treatment can be a crystallization heat treatment during cooling from the sintering temperature or during a reheating step, or it can be an annealing heat treatment for a silicon nitride containing primarily crystalline grain boundary phases. As a result of that treatment, the grain boundary phases are substantially crystalline and are formed or recrystallized by the annealing. Such post-sintering crystallization or annealing is carried out at a temperature greater than 1375°C, and preferably greater than 1450°C.

Advantageously, the silicon nitride of this invention is fabricated by a gas pressure sintering process which does not have the shape and size limitations of hot pressing, and which does not require the encapsulation and de-encapsulation steps and the high gas pressure of hot isostatic pressing. The combination of excellent properties and ease of fabrication makes the silicon nitride ceramics of the present invention most suitable for industrial applications such as components for gas turbine and automotive engines and as cutting tools.

FIG. 1 is a plot showing the relationship between the average room temperature strength and the average size of the fracture origins which are large acicular $\beta$ $Si_3N_4$ grains for the material of this invention;

FIG. 2 is a plot showing the Weibull strength distribution for sample No. 58; and

FIG. 3 is a plot showing the relationship between the fracture stress and the size of the fracture origin which is a large acicular $\beta Si_3N_3$ grain for every test specimen of sample No. 58.

Three requirements have to be met concurrently to manufacture a high toughness, high strength (room temperature and 1375°C) and reliable silicon nitride ceramic: (1) the grain boundary phase must be refractory so that the 1375°C strength can be high; (2) the ceramic must be dense and have an optimum microstructure consisting of whisker-like $\beta$ $Si_3N_4$ grains; and (3) the grain boundary must be weak for sufficient debonding along the grain boundary of the whisker-like $\beta$ $Si_3N_4$ grain to take place. Details for selecting conditions to manufacture a silicon nitride to meet all these requirements are set forth hereinafter.

In principle, the sintered body of the present invention is formed by sintering a composition comprising (a) silicon nitride, (b) rare earth compounds and optional strontium compound as sintering aids, and (c) silicon carbide. In this composition, component (a) should be present in an amount 85 to 94 percent by weight, and the component (b) should be present in an amount 6 to 15 percent by weight to make up the 100 percent. In addition, component (c) should be present in an amount from 0.5 to 1.9 parts by volume per 100 parts by volume of components (a) and (b).

The product obtained by the process according to this invention should comprise no less than 85 weight percent silicon nitride so that the volume fraction of the grain boundary phases is not too high as excessive grain boundary phase may degrade the fracture toughness and high temperature properties. However, the amount of silicon nitride should be no more than 94 weight percent so that the quantity of liquid phase for sintering is sufficient for densification to proceed to at least 95 percent of theoretical density.

The product obtained by the process according to the present invention is fabricated by adding 6 to 15 percent by weight sintering aids which form grain boundary phases. Sintering aids consisting of $Y_2O_3$, ranging from 1 to 5% by weight, $La_2O_3$, ranging from 3 to 7%, and SrO, ranging from 0 to 2% by weight, may be used for enhancing densification. While said oxides are effective sintering aids and are used in the present invention, it is well known in the field that all rare earth oxides can be effective and refractory sintering aids, and may, therefore, be employed to fabricate the product obtained by the process according to this invention. One reason for selecting a composition of at least two rare earth compounds and optional strontium compound is to reduce the liquidus temperature of the system so that densification and microstructure development can be accomplished by processes other than hotpressing or hot isostatic pressing. The amount of strontium added when calculated as SrO should be no greater than 2% by weight so that the high temperature properties will not be degraded. Another reason for selecting said composition is that the resulting grain boundary phases have good debonding property and yield ceramics with high fracture toughness.

Another requirement in the fabrication of the product obtained by the process according to this invention is to add silicon carbide in the powder mixture. The amount should not exceed 1.9% by volume in order to permit sintering to full density, and should be at least 0.5% by volume in order to be effective.

The silicon carbide addition improves the strength properties through moderation of the grain growth kinetics during sintering thus resulting in a more uniform and finer microstructure, and through the modification of grain boundary properties. During sintering, two possible reactions occur in the product of this invention owing to the addition of silicon carbide. First, the silicon carbide can partially dissolve into liquid phase at sintering temperature, and because carbon has strong bonding with other cation elements such as silicon and rare earth in the liquid, the viscosity of the liquid can be increased. Second, excess silicon carbide particles at grain boundaries can inhibit grain boundary migration. The combination of these two effects can suppress exaggerated grain growth and result in a more uniform and finer microstructure as compared to the microstructure of a similarly processed silicon nitride which does not contain silicon carbide. This more uniform and finer microstructure affords production of ceramic parts having high strength. Incorporating carbon in the grain boundary glassy phase also improves its rigidity and as a result the high temperature strength of the sintered silicon nitride improves. Similar effects of carbon on the properties of oxycarbonitride and oxycarbide glasses have been reported by, for instance, J. Homeny et al, J. Am. Ceram. Soc.,70 [5] C114 (1987).

According to the above-mentioned WO92/22516, a desirable microstructure and grain boundary property yielding high toughness and high strength can be generated by sintering the silicon nitride powder compact of afore-defined compositions by a special process consisting of at least two temperature steps.

The purpose for the first firing step is to prepare an intermediate ceramic of 70 to 95 percent theoretical density comprising a high density of whisker-like $\beta$ $Si_3N_4$ grains of uniform sizes nucleated and grown in situ through the transportation of atoms via vapor and liquid phases. The formation of this intermediate microstructure is possible since the powder compact initially had high pore volume providing room for $\beta$ $Si_3N_4$ grain to grow along its c axis under the anisotropic surface energy driving force. This incorporation of high density of whisker in the ceramic body cannot be achieved by traditional ceramic processing means without problems such as agglomeration and poor green density which translate to sintered parts of poor quality. The firing temperature should be greater than 1800°C so that the nucleation and growth rates for the whisker-like $\beta$ $Si_3N_4$ grain are adequate. It should be less than 2000°C because higher temperatures during this step result in exaggerated growth of silicon nitride grains which can eventually lead to a ceramic body of undesirable microstructure. In addition, the firing time should range from 0.5 hours to 10 hours to allow sufficient amount of whisker-like $\beta$ $Si_3N_4$ grains to develop while controlling grain coarsening so that densification and development of desirable microstructure proceeds.

The intermediate ceramic is then further sintered at a temperature ranging from 2000°C to 2100°C for a time ranging from 1 to 10 hours in order to form a final ceramic body reaching at least 95 percent of theoretical density and to further develop the in-situ grown, whisker-like $\beta$ $Si_3N_4$ grains. A temperature higher than 2000°C and at least 25°C higher than that of the first step is selected in order to complete the densification of the ceramic and to generate a large quantity of whisker-like $\beta$ $Si_3N_4$ grains. The temperature is limited to less than 2100°C because at temperatures in excess of 2100°C the process of grain coarsening becomes significant and has undesirable effects on microstructure. The heat treating time should range from 1 to 10 hours so that sufficient densification and grain growth occur for the desirable microstructure to form.

The sintering and heat treating steps are carried out under elevated pressure of nitrogen gas or of a mixture of $N_2$ with one or more inert gases such as Ar or He. Further, in order to prevent excessive decomposition of silicon nitride during the sintering and heat treating steps, it is preferred that the nitrogen pressure is not less than 3.3, 8, 23, 30 and 50 atm at 1800, 1900, 2000, 2050, and 2100°C, respectively.

According to the present invention, further improved silicon nitride having a more uniform microstructure, and exhibiting improved room temperature strength characteristics and high temperature long term durability, can be manufactured using a sintering process consisting essentially of an initial firing between 1500 and 1850°C for more than 0.5 but less than eight hours, an intermediate firing between 1850 and 2000°C for at least 30 minutes but less than five hours, and a final firing between higher than 2000 up to 2100°C for at least one hour but no more than 5 hours. Such sintering process creates a particularly uniform microstructure through modifying the nucleation and growth kinetics of the whisker-like $\beta$ $Si_3N_4$ grains.

If the silicon nitride fabricated using the conditions described hereandabove is cooled relatively fast from the sintering temperature so that the liquid phase form glass between the $Si_3N_4$ grains, its microstructure and grain boundary phase property is sufficient to yield a ceramic body with chevron-notch fracture toughness greater than 7.5 MPa $\cdot$ m$^{0.5}$ and damage resistance properties. However, if the silicon nitride is slow-cooled or heat-treated after the sintering so that it contains primarily crystalline grain boundary phases, damage resistance properties of said silicon nitride ceramic are found, unexpectedly, to depend strongly on the temperature at which the major crystallization event takes place. If this event takes place either during cooling or in a reheating process at 1375°C or lower temperatures, the grain boundary property changes which results in significant reduction of damage resistance. On the other hand, if the major crystallization process takes place at temperatures above 1375°C, more preferably above 1450°C, the damage resistance property remains about the same as that of the silicon nitride ceramic without the crystallization heat treatment. Moreover, we have unexpectedly found that for silicon nitride ceramics which have lost some of their damage resistance as a result of grain boundary phase crystallization at 1375°C or lower temperatures, an annealing process at temperature greater than 1375°C can restore the material's fracture toughness.

The following is a brief description of a general procedure for manufacturing the final silicon nitride ceramic of the present invention:

First, a homogeneous mixture of powders is formed by known methods. The mixture is prepared by blending and milling powders of silicon nitride (85 to 94 wt %) and sintering aids (6 to 15 wt%) consisting primarily of compounds of at least two rare earth elements and optional compound of Sr, and additionally 0.5 to 1.9 volume percent of silicon carbide. Said compounds of rare earth elements are preferably oxides. The powder mixture is then formed into the desired shape by slip casting, cold isostatic pressing, die forming, or other conventional ceramic manufacturing techniques.

The green ceramic body is then manufactured in accordance with this invention by firing the ceramic in the temperature range of 1500°C to 2100°C, wherein (a) an initial sintering is carried out at temperatures between 1500 and 1850°C and preferably between 1650 and 1850°C, for a time greater than 0.5 hours but less than eight hours, and preferably greater than 2 but less than 6 hours; (b) an intermediate sintering is carried out at temperatures between 1850 and 2000°C, and preferably between 1900 and 1975°C for at least 30 minutes but less than five hours, and preferably for at least 60 minutes but less than 3 hours; (c) a final sintering is carried out at temperatures ranging from above 2000 up to 2100°C, preferably from and most preferably from 2010 to 2035°C and for a time ranging from one to five hours and preferably from 1 to 3 hours; (d) each of the steps being carried out under nitrogen pressure sufficiently high to avoid decomposition of silicon nitride, and the temperature of the succeeding steps being at least 25°C greater than that of the first of the steps.

After the completion of the sintering and grain growth process, the silicon nitride is cooled relatively fast so that the majority of the grain boundary phase remains amorphous, and then reheated to a temperature above 1375°C for crystallization. It can also be cooled down from the sintering temperature in a controlled way so that at least 90% of the grain boundary phase crystallizes at temperature above 1375°C, and more preferably above 1450°C. The grain boundary phase can also be crystallized at temperature below 1375°C first, and then annealed at temperature above 1375°C, and more preferably at temperature above 1450°C.

The mechanical properties of the silicon nitride ceramic are readily measured by use of standard tests. In particular, fracture strength measurement is carried out by cutting the material into 3 mm by 4 mm by 50 mm bars, loading the bar on a four-point bend fixture with 20 mm and 40 mm inner and outer spans, and fracturing the bar with test machines using a 5 mm/min. loading rate. High temperature testing is conducted using the specimen dimensions described above, and using silicon carbide fixtures having the same spans as the above described. For stress rupture testing, a dead weight is applied to the specimen under four-point bend until the specimen fails or testing time reaches 100 hours.

An optical microscope is applied to examine the fracture surface of the broken bars to identify the fracture origins. The predominant fracture origin for the silicon nitride of this invention is a large acicular $\beta Si_3N_4$ grain. The size of the fracture origin hereby defined to be equal to $(ld)^{1/2}$ where l and d are the length and width, or the maximum and the minimum projections of the acicular $\beta Si_3N_4$ grain, respectively. At least five, preferably more than ten, four-point flexure bars should be fractured to determine the average $\beta Si_3N_4$ fracture origin size of a sample.

A Chevron-notch method is used for fracture toughness measurement. A Chevron-notched specimen 6.35 mm by 6.35 mm by 25.4 mm is subjected to a three-point bend test using an 38.1 outer span and loading rate 0.0127 mm/min. The said method is adopted in the Advanced Turbine Technology Applications Project of the Department of Energy of the U.S. Government for structural ceramic materials evaluation and selection.

The indentation strength measurement is carried out by preparing 3 mm by 4 mm by 50 mm bars, diamond polishing the tensile surface down to 1 $\mu$m finish, indenting at the middle of the polished surface with Vickers indenter to generate cracks, two of which are parallel to the edges of the bar, and then fracturing using the procedure described above for strength testing. Since the silicon nitride ceramic body of this invention possesses R-curve behavior, a range of Vickers indentation loads ranging from 1 kg to 50 kg should be used to unequivocally characterize this property.

The microstructure and grain size of silicon nitride are characterized using scanning electron microscopy and an image analyzer. The sample is prepared by polishing the surface to be examined down to 1 $\mu$m finish using diamond paste, etching with molten NAOH at 400°C for 26 minutes, and coating the specimen with a conducting material like gold. The image analyzer can map out the morphology and dimensions of individual silicon nitride grains. For each specimen at least 3000 grains are measured. The minimum and maximum projections for each grain are defined as the grain width and grain length, respectively. The apparent aspect ratio is calculated by dividing the maximum projection (grain length) by the minimum projection (grain width).

The following example is presented to provide a more complete understanding of the invention. The specific technique, conditions, materials, proportions and reported data set forth to illustrate the principles and practice of the invention are exemplary.

## EXAMPLE 1

The starting compositions for silicon nitride ceramics used in this example are shown in Table 1(a). A raw material powder of $Si_3N_4$ with alpha content of 96% and containing less than 100 ppm of metallic impurities such as Fe, Al, Ca, Na, or K and 1 percent by weight of oxygen and having an average grain size of 0.6 $\mu$m and a specific surface area of ~13 $m^2$/g was used. Yttrium oxide ($Y_2O_3$) and lanthanum oxide ($La_2O_3$) with purity of more than 99% by weight and average grain size less than 10 micrometers were used in the proportions as shown in Table 1(a). Strontium carbonate (99% pure, ~1 $\mu$m average size) was used as the precursor for strontium oxide (SrO): one hundred parts by weight strontium carbonate yields 70 parts by weight SrO. Appropriate amounts of strontium carbonate were used to yield strontium oxide with the weight percentages shown in Table 1(a). The quantity of silicon carbide (99% pure, average size ranging from 0.2 $\mu$m to 5 $\mu$m) shown in Table 1(a) was calculated as a percentage of the total volume. For each compound, its amount in volume is equal to its amount in weight divided by its density. The densities for pure $Si_3N_4$, $Y_2O_3$, $La_2O_3$, SrO, and SiC, are 3.2, 5.0, 6.5, 4.7 and 3.2 $g/cm^3$, respectively.

The formulated mixture weighing 350 g was wet-milled for 24 hours in a one liter high density polyethylene bottle with 500 mL isopropanol and with 2 kg silicon nitride grinding media. The milled slurry was vacuum dried, and the resulting powder sieved through a 0.25 mm (60 mesh) nylon screen. The sieved powder was isostatically pressed at a pressure 200-300 MPa to obtain green compacts of approximately 25 mm by 25 mm by 60 mm.

The starting compositions for the silicon nitride ceramics in this example are all within the scope of this invention, and they are shown in Tables 1(a) and 2(a).

Table 1(a)

| Sample No | $Si_3N_4$ (wt %) | $Y_2O_3$ (wt %) | $La_2O_3$ (wt %) | SrO (wt %) | SiC (volume %) |
|---|---|---|---|---|---|
| 29 | 92 | 1.8 | 5.4 | 0.8 | 1 |
| 30 | 92 | 1.5 | 4.5 | 2 | 1.5 |
| 31 | 92 | 1.8 | 5.4 | 0.8 | 1.5 |
| 32 | 92 | 1.5 | 4.5 | 2 | 1.5 |
| 33 | 92 | 1.8 | 5.4 | 0.8 | 1.5 |
| 34 | 92 | 1.8 | 5.4 | 0.8 | 1.5 |
| 35 | 92 | 1.8 | 5.4 | 0.8 | 1.5 |
| 36 | 92 | 1.6 | 4.9 | 1.5 | 1.5 |
| 37 | 92 | 1.6 | 4.9 | 1.5 | 1.5 |
| 38 | 92 | 1.8 | 5.4 | 0.8 | 1.5 |
| 39 | 92 | 1.6 | 4.9 | 1.5 | 1.5 |
| 40 | 92 | 1.6 | 4.9 | 1.5 | 1.5 |

Table 1(b)

| Sample No. | Initial $T_1$(°C)/$t_1$(hr) | Intermed iate $T_2$(°C)/$t_2$(hr) | Final $T_3$(°C)/$t_3$(hr) | R.T. Strength (MPa) | Ave. R.T. Fracture origin Size ($\mu$m) |
|---|---|---|---|---|---|
| 29 | RAMP*/0.5 | 2000/3 | 2050/3 | 742 | 41 |
| 30 | "/0.75 | 1950/1 | 2050/4.5 | 791 | 28 |
| 31 | " | 1950/1 | 2050/4.5 | 736 | 30 |
| 32 | " | 1950/2 | 2050/5 | 800 | 32 |
| 33 | " | 1950/2 | 2050/5 | 797 | 39 |
| 34 | " | 1900/2 | 2050/4.5 | 798 | 28 |
| 35 | " | 1950/1 | 2050/4.5 | 754 | 36 |
| 36 | " | 1950/1 | 2050/4.5 | 766 | 38 |
| 37 | " | 1900/2 | 2020/4 | 813 | 29 |
| 38 | " | 1900/2 | 2020/4 | 756 | 33 |
| 39 | " | 1950/2 | 2020/4 | 770 | 36 |
| 40 | "/1 | 1975/2.5 | 2020/3 | 804 | 28 |

Note
*1500 to 1850°C

Table 2(a)

| Sample No | $Si_3N_4$ (wt %) | $Y_2O_3$ (wt %) | $La_2O_3$ (wt %) | SrO (wt %) | SiC (volume %) |
|---|---|---|---|---|---|
| 41 | 92 | 1.8 | 5.4 | 0.8 | 1 |
| 42 | 92 | 1.6 | 4.9 | 1.5 | 1.5 |
| 43 | 92 | 1.8 | 5.4 | 0.8 | 1.5 |
| 44 | 92 | 1.8 | 5.4 | 0.8 | 1.5 |
| 45 | 92 | 1.7 | 5.1 | 1.2 | 1.5 |
| 46 | 92 | 1.6 | 4.9 | 1.5 | 1.5 |
| 47 | 92 | 1.6 | 4.9 | 1.5 | 1.5 |
| 48 | 92 | 1.6 | 4.9 | 1.5 | 0.8 |
| 49 | 92 | 1.6 | 4.9 | 1.5 | 1.5 |
| 50* | 92 | 1.6 | 4.9 | 1.5 | 1.5 |
| 51 | 92 | 1.6 | 4.9 | 1.5 | 1.5 |
| 52* | 92 | 1.6 | 4.9 | 1.5 | 1.5 |
| 53 | 92 | 1.6 | 4.9 | 1.5 | 0.8 |
| 54 | 92 | 1.6 | 4.9 | 1.5 | 1.5 |
| 55 | 92 | 1.7 | 5.1 | 1.2 | 1.5 |
| 56* | 92 | 1.6 | 4.9 | 1.5 | 1.5 |
| 57* | 92 | 1.6 | 4.9 | 1.5 | 0.8 |
| 58 | 92 | 1.6 | 4.9 | 1.5 | 0.8 |

[#]Silicon Nitride Powder with 1.5% Oxygen

Table 2(b)

| Sample No. | Initial $T_1(°C)/t_1(hr)$ | Intermedi ate $T_2(°C)/t_2(hr)$ | Final $T_3(°C)/t_3(hr)$ | R.T. Strength (MPa) | Ave. R.T. Fracture origin Size ($\mu$m) |
|---|---|---|---|---|---|
| 41 | 1650/2 | RAMP*/0.5 | 2050/5 | 770 | 29 |
| 42 | 1650/2 | 1950/1 | 2020/4 | 820 | 24 |
| 43 | 1650/2 | 1950/3 | 2020/3 | 811 | 29 |
| 44 | 1650/2 | 1975/2.5 | 2020/3 | 791 | 28 |
| 45 | " | " | " | 808 | 26 |
| 46 | 1750/2 | 1975/2.5 | 2020/3 | 821 | 26 |
| 47 | 1650/2 | 1975/2.5 | 2020/2 | 829 | 26 |
| 48 | " | " | " | 824 | 26 |
| 49 | 1650/2 | 1950/2.5 | 2020/2 | 843 | 24 |
| 50 | " | " | " | 852 | 21 |
| 51 | 1800/2 | 1950/2.5 | 2020/2 | 857 | 19 |
| 52 | " | " | " | 834 | 23 |
| 53 | " | " | " | 831 | 26 |
| 54 | 1650/6 | 1950/2.5 | 2020/2 | 836 | 26 |
| 55 | " | " | " | 854 | 27 |
| 56 | " | " | " | 874 | 20 |
| 57 | 1850/2 | 1950/2.5 | 2020/2 | 882 | 22 |
| 58 | " | " | " | 826 | 28 |

*1850 to 2000°C

Some of the samples in this example are prepared from a silicon nitride powder having similar characteristics to the powder described above but containing 1.5 % by weight of oxygen. Furthermore, some of the green bodies in this example were fabricated using slipcasting, which involves milling about 70% by weight powders and 30 % by weight water (pH adjusted to about 9) with silicon nitride grinding media in a high density polyethylene bottle or a urethanelined container for 24 hours. The resulting slip was then casted into a mold with plaster at the bottom to eventually form a block having a green dimension of about 6.6 x 6.6 x 2.54 cm (2.6" by 2.6" by 1").

The compositions listed in Table 1(a) were then fired according to the condition shown Table 1(b), and the compositions listed in Table 2(a) were fired according to Table 2(b). Notice that the manufacture of samples No. 29 to 40 (Tables 1(a) and (b)) is similar to that of the previous samples, while samples No . 41 to 58 (Tables 2(a) and (b)) were fabricated using a sintering process consisting of an initial firing between 1500 and 1850°C for more than 1 hour, an intermediate firing between 1850 and 2000°C for at least 30 minutes, and a final firing between 2000 and 2050°C for at least one hour but no more than 5 hours.

The microstructure of representative samples are characterized and shown in Table 3, in which we see that the average grain width is between 0.5 and 0.8 $\mu$m, and at least 25% of the grains have width greater than 0.6 $\mu$m, and at least 10% of the grains have width greater than 0.9 $\mu$m, and less than 5 percent of the grain having width greater than 2.5 $\mu$m and apparent aspect ratio greater than 5, and the average apparent aspect ratio is about 2.

The room temperature strength listed in Tables 1(b) and 2(b) shows a value of at least 600 MPa. We have conducted extensive fractography analysis on all the broken test bars of samples No . 29 to 58, and have found that greater than 90%, and very often up to 100%, of the bars from each sample fracture from large $\beta$ silicon nitride grains. We can see from Table 2(b) that the average fracture origin sizes for these samples are all smaller than 30 but larger than 15 $\mu$m, whereas from Table 1(b) we see that the fracture origin sizes are more scattered, with most of them greater than 30 $\mu$m but all are smaller than 50 $\mu$m.

Table 3

| Sample No. | Cumulative Grain Width (μm) Distribution | | | | | Aspect Ratio Distribution | |
|---|---|---|---|---|---|---|---|
| | Aver age | 75 % | 90% | 95 % | 99 % | Avera ge | 95 % |
| 32 | 0.72 | 0.89 | 1.22 | 1.46 | 2.20 | 2.02 | 3.78 |
| 33 | 0.74 | 0.91 | 1.26 | 1.53 | 2.17 | 2.05 | 3.43 |
| 43 | 0.63 | 0.79 | 1.11 | 1.37 | 1.99 | 2.04 | 3.92 |
| 48 | 0.68 | 0.85 | 1.17 | 1.43 | 2.11 | 2.03 | 3.95 |
| 51 | 0.60 | 0.75 | 1.08 | 1.30 | 1.77 | 2.04 | 4.0 |
| 52 | 0.61 | 0.77 | 1.08 | 1.28 | 1.66 | 1.99 | 3.73 |

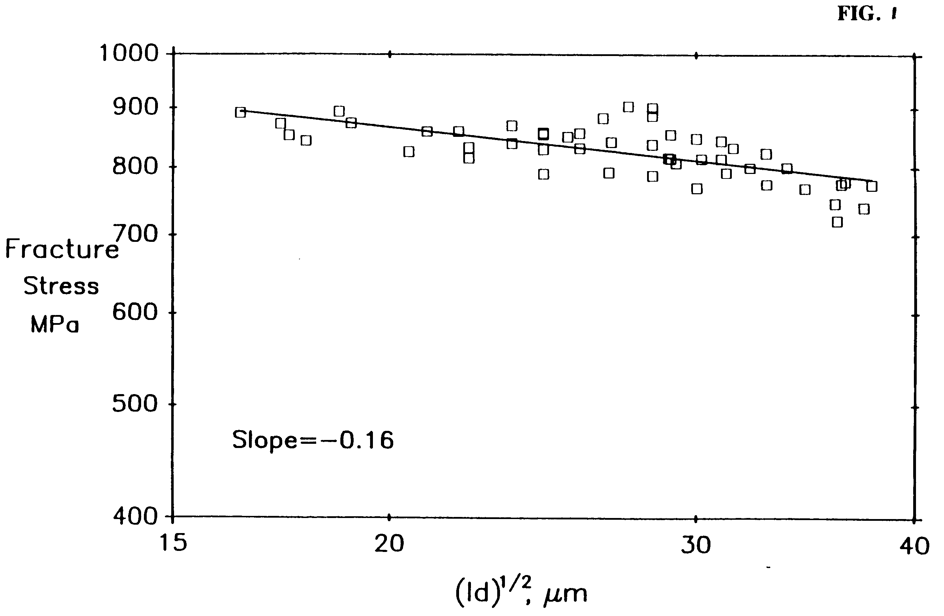

Furthermore, we have conducted extensive fractography on silicon nitride sintered bodies having compositions and microstructures set forth in this invention, and established a relation between the average size of the fracture origins (large acicular $\beta Si_3N_4$ grains) and the average strength, as shown in Figure 1. The upper and lower lines in Figure 1 can be expressed by the equation

$$\log y = A - z \log x$$

where:

$x$= average fracture origin size ($\mu$m),
$y$= average 4‹point bend strength (MPa),
$z$= the absolute value of the slope of the line
$A$= constant

$A$ is equal to 7.59 and 7.42 for the upper and lower lines, respectively, and $z$ is equal to 0.25 for both lines.

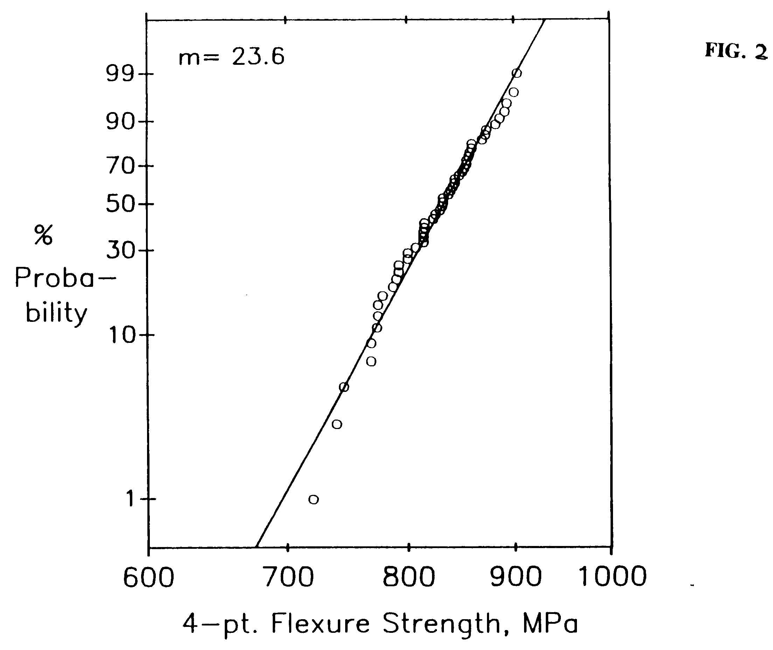

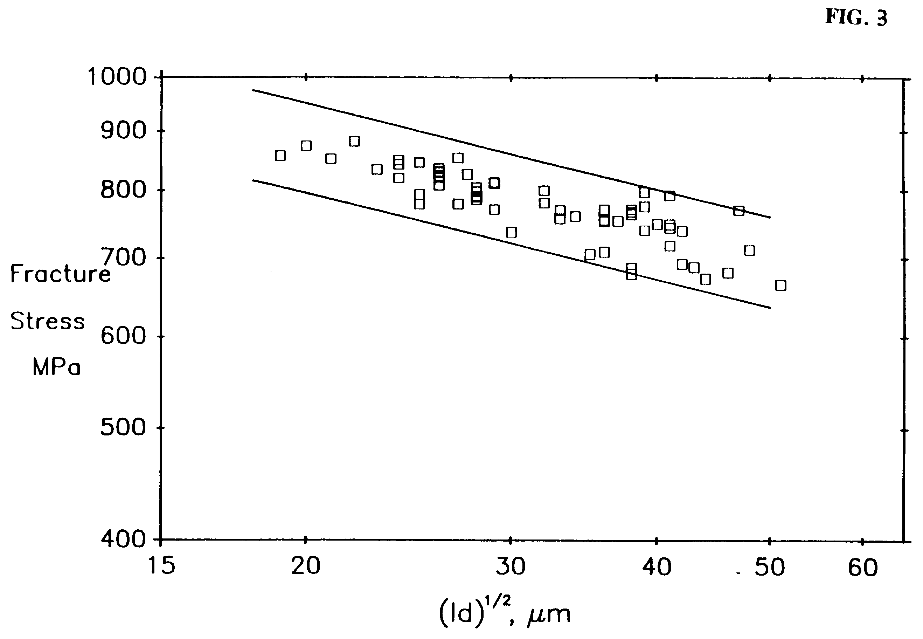

The Weibull modulus for the product of this invention is obtained by a least-squares regression analysis of the fast fracture strength, having a large acicular $\beta Si_3N_4$ grain as the fracture origin, and the failure probability P which has the formula

$$P = \frac{(i - 0.5)}{N}$$

where $i$ is the ith specimen, and $N$ is the total number of specimens for the sample (G.D. Quinn, J. Am. Ceram. Soc., 73 [8] 237484 (1990)). The Weibull moduli for representative samples along with their indentation strengths are shown in Table 4. The Weibull plot for sample No. 58, and the corresponding fracture stress fracture origin size relationship, are shown in Figures 2 and 3, respectively.

Table 4

| Sample No. | Weibull Modulus | Indentation Strength (MPa) | |
|---|---|---|---|
| | | 1 kg | 50 kg |
| 35 | 21 | 610 | 260 |
| 40 | 19 | 621 | 238 |
| 43 | 21 | 634 | 255 |
| 44 | 25 | 634 | 252 |
| 46 | 23 | 676 | 255 |
| 50 | 22 | 635 | 262 |
| 52 | 31 | 683 | 256 |
| 58 | 24 | 680 | 259 |

As we can see from Table 4, the Weibull moduli for the products of this invention having the large acicular $\beta Si_3N_4$ grains as the fracture origin are all greater than 19. Furthermore, the indentation strength reveals that these samples all have high fracture toughness and, therefore, exhibit the damage tolerant property.

High Weibull modulus is a highly desirable property for structural ceramics. The unusually high Weibull modulus for the silicon nitride of this invention is a result of its unique microstructure which results in the R-curve behavior. This attribute can be more clearly depicted by the slopes of the lines shown in Figure 1 and Figure 3, which all show negative values much larger than 0.5. The value of 0.5 corresponds to conventional silicon nitride ceramics which have a fine microstructure, low fracture toughness, and do not exhibit R-curve behavior. A larger negative slope means that the material's strength is less sensitive to the variation in size of the flaws. This relationship is equivalent to stating that the materials of the present invention have high Weibull modulus, as is well documented in this specification.

Stress rupture testing is a common method used in evaluating the reliability of a part. Samples No 40, 44, 46, 52, 55 are stress rupture tested at 1200°C at various stress levels starting from 483 MPa, and show a lifetime greater than 100 hours at 483 MPa. This lifetime is much higher than the lifetime for the conventional silicon nitride ceramics (G.D. Quinn, J. Mater. Sci., 25, 436192 (1990)). Such improvement is due to improved composition and microstructure which enhance the resistance to slow crack growth and creep damage at high temperatures.

**Claims**

1. A process for making a silicon nitride sintered body having a composition consisting essentially of:

(a) 85 to 94% by weight $\beta$ silicon nitride;
(b) 6 to 15% by weight grain boundary phases primarily consisting of (i) at least two rare earth elements wherein yttrium is considered a rare earth, and Sr ranging from 0 to 2 percent by weight of the total body when calculated as SrO, and (ii) at least two of Si, N, O, and C; and
(c) an additive consisting essentially of silicon carbide particulate with an average size less than 2 $\mu$m in the amount ranging from 0.5 to 1.9 parts by volume per 100 parts by volume of components (a) and (b), said additive being substantially homogenously dispersed within said sintered body, said sintered body having a microstructure wherein (1) said $\beta$ silicon nitride grains are acicular and have an average grain width ranging from 0.5 to 0.8 $\mu$m, (ii) at least 25% of said grains have width greater than 0.6 $\mu$m, and at least 10% of said grains have width greater than 0.9 $\mu$m, (iii) less than 5 percent of the grain having width greater than 2.5 $\mu$m and apparent aspect ratio greater than 5, with the proviso that the average apparent aspect ratio of all grains is at least 1.8, said sintered body having a density at least 97% of theoretical and a fracture origin, at least 90% of which is comprised of large acicular $\beta Si_3N_4$ grains and the average size of which ranges from, 15 to 30 $\mu$m;

by a sintering process consisting of firing in the temperature range of 1500°C to 2100°C, wherein:

(a) an initial sintering is carried out at a temperature between 1500 and 1850°C for a time greater than 0.5 hours but less than eight hours;
(b) an intermediate sintering is carried out at a temperature between 1850 and 2000°C for at least 30 minutes but less than five hours; and

(c) a final sintering is carried out at a temperature ranging from higher than 2000°C up to 2100°C for a time ranging from one to five hours;

(d) each of the steps being carried out under nitrogen pressure sufficiently high to avoid decomposition of silicon nitride, and the temperature of the succeeding steps being at least 25°C greater than that of the first of the steps.

2. A process according to Claim 1 comprising a post-sintering heat treatment at a temperature greater than 1375°C, during cooling from the sintering temperature or during a reheating step.

## Patentansprüche

1. Verfahren zur Herstellung eines Sinterkörpers aus Siliciumnitrid mit einer Zusammensetzung, die im wesentlichen besteht aus:

(a) 85 bis 94 Gew.-% β-Siliciumnitrid;

(b) 6 bis 15 Gew.-% Korngrenzenphasen, die hauptsächlich aus (i) mindestens zwei Seltenerdelementen, wobei Yttrium als Seltenerdmetall angesehen wird, und Sr im Bereich von 0 bis 2 Gew.-%, bezogen auf das Gewicht des gesamten Körpers und als SrO berechnet, und (ii) mindestens zwei Elementen aus der Gruppe Si, N, O und C bestehen; und

(c) einem Additiv, im wesentlichen bestehend aus teilchenförmigem Siliciumcarbid mit einer mittleren Korngröße unter 2 $\mu$m, in einer Menge im Bereich von 0,5 bis 1,9 Volumenteilen pro 100 Volumenteile der Komponenten (a) und (b), wobei das Additiv im Sinterkörper im wesentlichen homogen dispergiert ist, und der Sinterkörper eine Mikrostruktur aufweist, in der (1) die β-Siliciumnitridkörner nadelförmig sind und eine mittlere Kornbreite im Bereich von 0,5 bis 0,8 $\mu$m aufweisen, (ii) mindestens 25% der Körner breiter als 0,6 $\mu$m und mindestens 10% der Körner breiter als 0,9 $\mu$m sind, (iii) weniger als 5 Prozent des Korns breiter als 2,5 $\mu$m sind und einen scheinbaren Streckungsgrad über 5 aufweisen, mit der Maßgabe, daß der mittlere scheinbare Streckungsgrad aller Körner mindestens 1,8 beträgt, der Sinterkörper eine Dichte von mindestens 97% der theoretischen Dichte und einen Bruchursprung, der zu mindestens 90% von großen nadelförmigen β-$Si_3N_4$-Körnern gebildet wird und dessen mittlere Größe im Bereich von 15 bis 30 $\mu$m liegt, aufweist;

durch ein Sinterverfahren, bei dem man im Temperaturbereich von 1500°C bis 2100°C brennt, wobei man:

(a) bei einer Temperatur zwischen 1500 und 1850°C über einen Zeitraum von mehr als als 0,5 Stunden, aber weniger als acht Stunden, eine Anfangssinterung durchführt;

(b) bei einer Temperatur zwischen 1850 und 2000°C über einen Zeitraum von mehr als als 30 Minuten, aber weniger als fünf Stunden, eine Zwischensinterung durchführt und

(c) bei einer Temperatur von mehr als 2000°C bis 2100°C über einen Zeitraum von einer bis fünf Stunden eine Endsinterung durchführt;

(d) wobei man jeden der Schritte unter einem so hohen Stickstoffdruck durchführt, daß sich das Siliciumnitrid nicht zersetzt, und die Temperatur der nachfolgenden Schritte um mindestens 25°C höher ist als die des ersten Schritts.

2. Verfahren nach Anspruch 1, bei dem man während des Abkühlens von der Sintertemperatur oder eines erneuten Erhitzens bei einer Temperatur über 1375°C eine Nachbehandlung durchführt.

## Revendications

1. Procédé de fabrication d'un corps fritté à base de nitrure de silicium ayant une composition essentiellement composée:

(a) de 85 à 94% en poids de nitrure de silicium β;

(b) de 6 à 15% en poids de phases de limite de grain constituées principalement (i) d'au moins deux éléments terres rares dans lesquels l'yttrium est considéré comme une terre rare, et de Sr à raison de 0 à 2 pour cent en poids du corps total, calculé en SrO, et (ii) d'au moins deux éléments parmi Si, N, O et C; et

(c) d'un additif essentiellement constitué de carbure de silicium particulaire ayant une granulométrie moyenne inférieure à 2 $\mu$m, en quantité allant de 0,5 à 1,9 parties en volume, pour 100 parties en volume des constituants (a) et (b), ledit additif étant dispersé de façon essentiellement homogène au sein dudit corps fritté, ledit corps fritté ayant une microstructure dans laquelle (1) lesdits grains de nitrure de silicium β sont aciculaires et possèdent une largeur moyenne de grain s'échelonnant de 0,5 à 0,8 $\mu$m, (ii) au moins 25% desdits grains ont une largeur supérieure à 0,6 $\mu$m, et au moins 10% desdits grains ont une largeur supérieure à 0,9 $\mu$m, (iii) moins de 5 pour cent des grains ayant une largeur supérieure à 2,5 $\mu$m et un rapport des côtés apparent supérieur à 5, à condition que le rapport des côtés apparent moyen je tous les grains soit d'au moins 1,8, ledit corps fritté ayant une densité d'au moins 97% de la valeur théorique et une origine de fracture, dont au moins 90% se composent de gros grains aciculaires de $\beta Si_3N_4$ et dont la granulométrie moyenne s'échelonne de 15 à 30 $\mu$m;

par un procédé de frittage qui consiste en une cuisson, dans la gamme de températures de 1 500°C à 2 100°C, dans lequel:

(a) un frittage initial est réalisé à une température comprise entre 1 500 et 1 850°C pendant une durée supérieure à 0,5 heure, mais inférieure à huit heures;
(b) un frittage intermédiaire est réalisé à une température comprise entre 1 850 et 2 000°C pendant au moins 30 minutes, mais pendant moins de cinq heures; et
(c) un frittage final est réalisé à une température allant de plus de 2 000°C jusqu'à 2 100°C pendant une durée allant d'une à cinq heures;
(d) chacune des étapes étant réalisée sous une pression d'azote suffisamment élevée pour éviter la décomposition du nitrure de silicium et la température des étapes successives étant supérieure d'au moins 25°C à celle de la première des étapes.

2. Procédé selon la revendication 1, comprenant un traitement thermique après frittage, à une température supérieure à 1 375°C, durant le refroidissement qui commence à la température de frittage ou durant une étape de réchauffage.

FIG. 1

EP 0 636 112 B1

FIG. 2

m= 23.6

% Proba— bility

4—pt. Flexure Strength, MPa

**FIG. 3**